## Europäisches Patentamt

## European Patent Office

## Office européen des brevets

(11) Veröffentlichungsnummer: **0 050 217**
A2

# (12) EUROPÄISCHE PATENTANMELDUNG

(21) Anmeldenummer: **81107442.6**

(22) Anmeldetag: **19.09.81**

(51) Int. Cl.³: **G 09 B 7/06, A 63 F 9/18**

(30) Priorität: **18.10.80 DE 3039405**

(43) Veröffentlichungstag der Anmeldung: **28.04.82**
**Patentblatt 82/17**

(84) Benannte Vertragsstaaten: **AT BE CH DE FR GB IT LI LU NL**

(71) Anmelder: **Pelikan Aktiengesellschaft, Podbielskistrasse 141, D-3000 Hannover 1 (DE)**

(72) Erfinder: **Herrmannsen, Wulf, Rautenstrasse 24, D-3000 Hannover 1 (DE)**
Erfinder: **Meyer, Kurt, Sonnenhagen 24, D-3000 Hannover 51 (DE)**

(54) **Lernspielgerät.**

(57) Lernspielgerät mit einem gleichmäßigen Lochmuster, in dem die Ansprechlöcher verteilt sind, die eine von den anderen Löchern des Lochmusters abweichende Profilierung aufweisen, und mit einem in einem Griffteil verschiebbar geführten Stift, der bei Eintritt in ein Ansprechloch mit der Profilierung in Eingriff kommt, wobei eine Signaleinrichtung im Griffteil angeordnet und durch Verlagerung des Stiftes auslösbar ist, so daß die Profilierungen der Ansprechlöcher als verdecktes Igelmuster ausgeführt sind, welches als Profilierung für die Ansprechlöcher versenkt in bezug zum Lochmuster (5) angeordnete Vorsprünge (27–31) geringeren Querschnittes als der des Stiftes besitzt, der versenkt in einem Führungsansatz (33) des Griffteiles (24) bewegbar angeordnet ist, und daß der Führungsansatz (33) geringeren Querschnitt als die Löcher des Lochmusters aufweist.

ACTORUM AG

Pelikan Aktiengesellschaft
Hannover

0050217
15.9.1981
80/19 EU

## Lernspielgerät

Die Erfindung betrifft ein Lernspielgerät mit einem gleichmäßigen Lochmuster, in dem Ansprechlöcher verteilt sind, die
eine von den anderen Löchern des Lochmusters abweichende
Profilierung aufweisen, und mit einem in einem Griffteil verschiebbar geführten Stift, der bei Eintritt in ein Ansprechloch mit der Profilierung in Eingriff kommt, wobei eine Signaleinrichtung im Griffteil angeordnet und durch Verlagerung
des Stiftes auslösbar ist.

Solche Lernspielgeräte sind beispielsweise aus der US-PS
2 889 634 bekannt. In dieser bekannten Ausführung liegt immer
oben das gleichmäßige Lochmuster, welches nach Art einer Matrix
ausgeführt ist und in einem Feld aus Reihen und Zeilen gleichmäßig angeordnete Löcher aufweist. Dabei ist vorbehalten, daß
eine Platte mit diesem Lochmuster auch grafische Darstellungen
tragen kann. Die Bestimmung der Löcher des Lochmusters zu Ansprechlöchern erfolgt aber bei dieser bekannten Ausführung unterhalb der Platte mit dem Lochmuster entweder dadurch, daß eine Karte eingefügt wird, die im Bereich der Ansprechlöcher geschlossen ist und im Bereich der anderen Löcher Durchgänge aufweist, oder aber dadurch, daß z.T. die Löcher des Lochmusters unterhalb der Platte durch Stöpsel geschlossen werden.

Wenn daher von einer grafischen Darstellung die Rede ist, müßte die sich immer im Zusammenhang nur mit Umstand einzubringender Vorkehrungen für einen inneren Abschluß der als Ansprechlöcher dienenden Löcher des Lochmusters ändern. Infolgedessen sind, unter Einbeziehung eines Auseinanderbaues, dann die zwei verschiedenen Teile notwendigerweise auszuwechseln.

Die Profilierung ist in der bekannten Ausführung immer durch einen Abschluß, d.h. eine geringere Tiefe der Ansprechlöcher geschaffen, als sie die anderen Löcher des Lochmusters haben. Bekanntlich ragen dabei die Stifte aus dem Griffteil heraus, so daß sie bei Ansprechlöchern geringerer Tiefe nach innen bewegt werden.

Eine Signaleinrichtung kann optisch oder akustisch ausgeführt sein, d.h. in Form einer Lichtquelle oder eines Tongebers. Beides wird einbezogen.

Wenn der Stift aus dem Griffteil herausragt und in diesen Griffteil einschiebbar ist, dann ergibt sich der Nachteil, daß bei einem verwinkelten oder schrägen Einsatz des Stiftes, bzw. einer entsprechenden schrägen Haltung des Griffteiles, eine Verklemmung des Stiftes schon im oberen Bereich des Lochmusters möglich ist. Dadurch würden sich Fehlsignale ergeben, weil der Stift durch Verklemmung gehalten ist und bei Andruck des Griffteiles nach innen verschoben wird, so daß die Signaleinrichtung ausgelöst wird.

0050217

Der Erfindung liegt die Aufgabe zugrunde, ein Lernspielgerät zu schaffen, daß sowohl nach Art der genannten US-PS ausgestaltet ist, jedoch auch im oberen Bereich eine Schablone über der Platte mit dem Lochmuster haben kann, wobei aber sichergestellt ist, daß eine Betätigung der Signaleinrichtung nur durch die korrekte und genügend tiefe Einführung des Stiftes ausgelöst wird.

Diese Aufgabe wird erfindungsgemäß dadurch gelöst, daß die Profilierungen der Ansprechlöcher als verdecktes Igelmuster ausgeführt sind, welches als Profilierung für die Ansprechlöcher versenkt in bezug zum Lochmuster angeordnete Vorsprünge geringeren Querschnittes als der des Stiftes besitzt, der versenkt in einem Führungsansatz des Griffteiles bewegbar angeordnet ist, und daß der Führungsan-satz geringeren Querschnitt als die Löcher des Lochmusters aufweist.

Dadurch erzeugt die Einführung des Führungsansatzes in ein Loch auch bei schrägem Halten des Griffteiles kein Signal, sondern lediglich eine Hemmung der Einführungsbewegung. Diese Hemmung deutet dann an, daß eine bessere Ausrichtung des Griffteiles erforderlich ist. Erst bei der korrekten Einführung in der vorgesehenen Tiefe erfolgt durch die Vorsprünge eine ausreichende Rückschiebung des Stiftes nach innen im Führungsansatz, so daß mit Sicherheit das einem Ansprechloch zugeordnete Signal ausgelöst wird. Selbst bei einer winkligen Ausrichtung des Führungsansatzes zu einem Vorsprung würde dann, wenn eine Verklemmung auftritt, bei noch nicht genügend zurückgeschobenem Stift kein Signal auftreten.

Durch die Erfindung wird daher die zugrundeliegende Ausführung eines Lernspielgerätes in entscheidendem Maße dahingehend

0050217

verbessert, daß richtige Antworten mit Sicherheit angezeigt
werden und Fehlanzeigen, die gerade für Lernspielgeräte
außerordentlich nachteilig sind, ausgeschlossen werden.

Einbezogen wird, daß die Vorsprünge zweckmäßig nach oben
konisch ausgeführt sind. Hierdurch kann die Handhabung erleichtert werden. Entsprechendes gilt für eine nach unten
konische Erweiterung der Führung für den Stift in dem Führungsansatz.

Vorteilhaft ist der Stift in der Ruhestellung mit Abstand
von der durch die untere Querebene gebildeten Abschlußebene
der Führung gehalten. Dadurch wird ausgeschlossen, daß eine
Anfangsbewegung des Stiftes überhaupt auftritt, wenn noch
keine Profilierung in die Führung für den Stift innerhalb
des Führungsansatzes eingedrungen ist.

Einbezogen wird dabei, daß der Griffteil zweckmäßig an der
Wurzel des Führungsansatzes eine Stufe als Auflager an den
Rändern des Lochmusters aufweist. Dadurch wird der ausreichende Einsatz des Griffteiles für die Funktion festgelegt.

Abgesehen von der bekannten Ausführung nach der US-PS, sieht
eine vorteilhafte Ausgestaltung der Erfindung, in welcher
das Lochmuster in einer Platte angeordnet ist, vor, daß das
Igelmuster unter der Platte angeordnet ist, welche ein mit
Ausrichtungsprofilierungen versehenes Auflagerfeld für auswechselbare Fragekarten mit einzelnen Fragefeldern besitzt,
in denen entsprechend dem Lochmuster Antwortlöcher verteilt
sind, von denen wenigstens eines zu einem Ansprechloch ausgerichtet ist.

Dadurch braucht bei einer Auswechslung des Fragenkomplexes und einer Änderung auch auszuwählender Lagen von Ansprechlöchern das Gerät nicht auseinandergebaut zu werden, sondern die oben auflegbaren Fragekarten bilden jeweils eine Schablone, die mit der Auflage der Fragekarten eine Änderung in der Lage der erreichbaren Ansprechlöcher mit sich bringt.

Die Erfindung wird im folgenden anhand von Ausführungsbeispielen beschrieben, die schematisch in der Zeichnung dargestellt sind. In der Zeichnung zeigen:

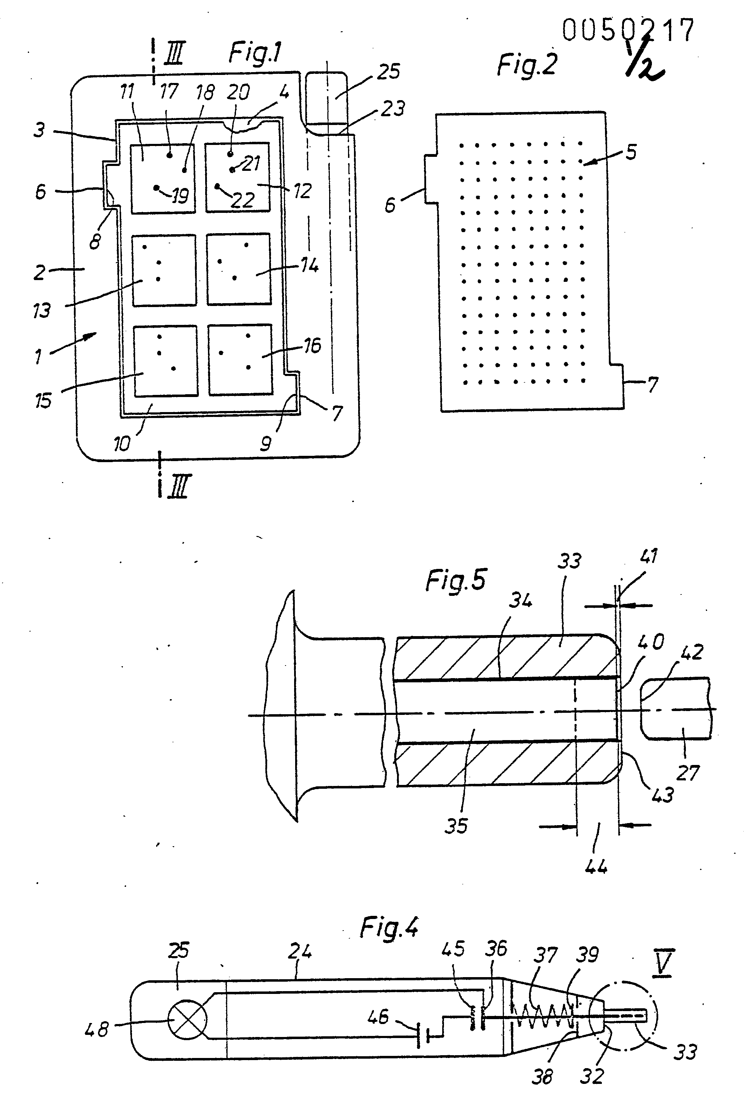

Fig. 1:    eine Draufsicht auf ein Lernspielgerät;

Fig. 2:    einen Ausschnitt aus dem Lernspielgerät im Bereich eines Auflagerfeldes;

Fig. 3:    einen Schnitt längs der Linie III - III durch Fig. 1;

Fig. 4:    einen Griffteil mit Führungsansatz in schematischer Darstellung auch zur Erläuterung des Stiftes;

Fig. 5:    in vergrößerter Darstellung einen Ausschnitt gemäß dem Bereich V in Fig. 4 zusammen mit einer Profilierung;

Fig. 6:    in vergrößerter Darstellung einen Ausschnitt gemäß dem Bereich VI in Fig. 3

In allen Figuren sind gleiche Teile mit gleichen Bezugszeichen bezeichnet.

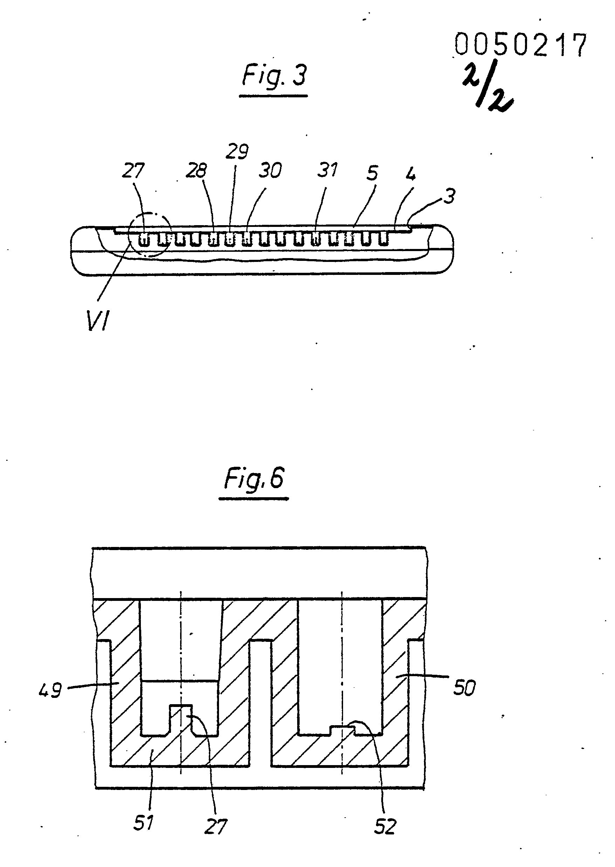

Das Lernspielgerät wird durch ein Gehäuse 1 gebildet, welches in einer oberen Platte 2 innerhalb eines durch eine profilierte Randlinie 3 gebildeten Auflagerfeldes 4 ein Lochmuster 5 aufweist, in dem gleichmäßig Löcher reihen- und zeilenweise nach Art einer Matrix angeordnet sind. Die profilierte Randlinie 3 ist, wie auch aus Fig. 3 hervorgeht, beispielsweise durch die Stufenfläche einer Vertiefung für das Auflagerfeld 4 ausgeführt.

Die Randlinie, bzw. der von ihr gebildete Rand, hat beispielsweise Profilierungen 6, 7, die unsymmetrisch einander zugeordnet sind und in welche entsprechend profilierte Gegenprofilierungen 8, 9 einer Fragekarte 10 einsetzbar sind, so daß
diese in ausgerichteter Weise auf das Auflagerfeld 4 aufbringbar ist. Diese Fragekarte hat beispielsweise sechs Fragefelder
11 bis 16, in denen beispielsweise, wie für die Fragefelder 11,
12 gezeigt ist, drei Antwortlöcher 17 bis 22 angeordnet sind,
die immer zu einem Loch im Lochmuster 5 ausgerichtet sind, und
von denen wenigstens ein Antwortloch einem Ansprechloch zugeordnet ist.

Es wird darauf hingewiesen, daß im Gehäuse 1 beispielsweise
eine nach oben durch eine Profilierung 23 freiliegende Steckeinrichtung für einen Griffteil 24 (Fig. 4) angeordnet ist, der
im hinteren Ende ein Kopfstück 25 mit einer Signaleinrichtung
aufweist.

Wie aus Fig. 3 ersichtlich ist, besteht das Gehäuse aus zwei
Halbschalen, die in einer in der Kunststofftechnik üblichen
Weise zusammengesetzt sind. In der oberen Halbschale ist die das
Auflagerfeld 4 bildende Platte innerhalb eines ringsherumlaufenden Randes nach unten abgesetzt und von dem Lochmuster 5 gleichmäßig durchsetzt. Unterhalb der Löcher des Lochmusters 5 sind
in Ausrichtung zu den Löchern des Lochmusters die Vorsprünge 27
bis 31, die das Igelmuster bilden, angeordnet. Diese Vorsprünge
27 bis 31 bestimmen die sogenannten Ansprechlöcher. Wenn eine
Sonde aus Griffteil und Stift, die durch die Löcher des Lochmusters nach Auswahl der Antwortlöcher 17 bis 22 eingeführt
wird, auf einen solchen Vorsprung 31 trifft, wird eine Betätigung der Signaleinrichtung im Kopfstück 25 des Griffteiles ausgelöst.

Aus Fig. 6 ist besser erkennbar, daß die Vorsprünge 27 - 31,
beispielsweise die Vorsprünge 27, 28, am Boden 51 von becherartigen Ansätzen 49, 50 angeordnet sind. Diese becherartigen
Ansätze erstrecken sich von den Rändern der Löcher des Loch-

0050217

musters 5 in die untere Halbschale. Für ein Ansprechloch ist der Vorsprung 27 in Fig. 6 gezeigt, während in einem benachbarten Loch, das kein Ansprechloch ist, lediglich ein kein Signal auslösender flacher Ansatz 52 angeordnet ist. Dieser Ansatz kann vorteilhaft bei Einfügung eines Stiftes eine Führungsfunktion für die Kontrolle einer senkrechten Stellung des Griffteiles bilden.

Aus Fig. 4 ist ersichtlich, daß der Griffteil am vom Kopfstück 25 abgekehrten Ende, durch eine umgebende Stufe 32 abgesetzt, einen Führungsansatz 33 in axialer Verlängerung aufweist. Dieser Führungsansatz ist auch in Fig. 5 dargestellt. Er enthält eine Führung 34 für den versenkt angeordneten Stift 35, der in den Griffteil verlängert ist und ein Schalterglied 36 trägt. Dieser Stift 35 steht unter der Einwirkung einer Feder 37, welche ihn in die weitest vorgeschobene Stellung drückt, die durch einen Anschlag 38 im Griffteil 24 und einen Gegenanschlag 39 am Stift 35 bestimmt ist. Diese Anschlaganordnung ist so gewählt, daß das Ende 40 des Stiftes um einen Abstand 41 innerhalb der Führung 34 gehalten wird, auch wenn sich der Stift in der am weitesten vorgeschobenen Stellung befindet.

Der äußere Querschnitt des Führungsansatzes 33 ist etwas kleiner als die Löcher des Lochmusters bzw. auch der Antwortlöcher 17 bis 22, so daß er einführbar ist und dann auf einen Vorsprung, beispielsweise 27, treffen kann, wenn es sich um ein Ansprechloch handelt. Dieser Vorsprung ist beispielsweise an seinem freien Ende bei 42 abgefast oder konisch ausgeführt. Der Abstand 41 bedeutet einen Abstand nach innen von der durch eine untere Querebene 43 gebildeten Abschlußebene der Führung 34 bzw. des Führungsansatzes 33. Dieser Abstand 41 im Bereich der Führung 34 ermöglicht bei senkrechter Einführung in ein Loch des Lochmusters die Kontrolle der senkrechten Stellung des Griffteiles dadurch, daß ein flacher Ansatz 52 in die Führung in den Bereich einfügbar ist, der sich aus dem Abstand 41 ergibt.

Die Stufe 32 ist hinsichtlich der Anordnung der Lochränder entweder des Lochmusters oder der Fragelöcher so angelegt, bzw.
ist der Führungsansatz 33 unterhalb der Stufe 32 so lang ausgeführt, daß der Stift 35 um eine Strecke 44 zurückschiebbar
ist, wenn der Eingriff im Bereich eines Ansprechloches erfolgt.
Dann stellt das Schalterglied 36 Kontakt mit einem Gegenschalterglied 45 im Griffteil her, so daß über eine Energiequelle 46 im beispielsweise durchsichtigen Kopfstück 25 die
Signaleinrichtung 48 ausgelöst bzw. zum Erleuchten gebracht
wird, wenn es sich um eine Lichtquelle handelt.

Pelikan Aktiengesellschaft
Hannover

0050217
15.9.1981
80/19 EU

Patentansprüche

1. Lernspielgerät mit einem gleichmäßigen Lochmuster, in dem die Ansprechlöcher verteilt sind, die eine von den anderen Löchern des Lochmusters abweichende Profilierung aufweisen, und mit einem in einem Griffteil verschiebbar geführten Stift, der bei Eintritt in ein Ansprechloch mit der Profilierung in Eingriff kommt, wobei eine Signaleinrichtung im Griffteil angeordnet und durch Verlagerung des Stiftes auslösbar ist, dadurch gekennzeichnet, daß die Profilierungen der Ansprechlöcher als verdecktes Igelmuster ausgeführt sind, welches als Profilierung für die Ansprechlöcher versenkt in bezug zum Lochmuster (5) angeordnete Vorsprünge (27-31) geringeren Querschnittes als der des Stiftes (35) besitzt, der versenkt in einem Führungsansatz (33) des Griffteiles (24) bewegbar angeordnet ist, und daß der Führungsansatz (33) geringeren Querschnitt als die Löcher des Lochmusters (5) aufweist.

- 1 -

2. Lernspielgerät nach Anspruch 1, dadurch gekennzeichnet, daß die Vorsprünge (27-31) nach oben konisch ausgeführt sind.

3. Lernspielgerät nach Anspruch 1, dadurch gekennzeichnet, daß die Führung (34) für den Stift (35) nach unten konisch erweitert ist.

4. Lernspielsgerät nach einem der Ansprüche 1 bis 3, dadurch gekennzeichnet, daß der Stift (35) in der Ruhestellung mit Abstand von der durch die untere Querebene (43) gebildeten Abschlußebene der Führung (34) gehalten ist.

5. Lernspielgerät nach einem der Ansprüche 1 bis 4, dadurch gekennzeichnet, daß der Griffteil (24) an der Wurzel des Führungsansatzes (33) eine Stufe (32) als Auflager an den Rändern des Lochmusters (5) aufweist.

6. Lernspielgerät nach einem der Ansprüche 1 bis 5, bei welchem das Lochmuster in einer Platte angeordnet ist, dadurch gekennzeichnet, daß das Igelmuster unter der Platte (2) angeordnet ist, welche ein mit Ausrichtungsprofilierungen versehenes Auflagerfeld (4) für auswechselbare Fragekarten (1o) mit einzelnen Fragefeldern (11-16) besitzt, in denen entsprechend dem Lochmuster (5) Antwortlöcher (17-22) verteilt sind, von denen wenigstens eines zu einem Ansprechloch ausgerichtet ist.

7. Lernspielgerät nach einem der Ansprüche 1 - 6, dadurch gekennzeichnet, daß Vorsprünge (27-31) des Igelmusters am Boden von becherartigen Ansätzen (49) angeordnet sind, die sich von den Rändern der Löcher des Lochmusters (5) nach unten in die untere Halbschale erstrecken.

- 3 -

8. Lernspielgerät nach Anspruch 7, dadurch gekennzeichnet, daß
   becherartige Ansätze (49, 50) an allen Löchern des Lochmusters (5) angeordnet sind und am Boden eines becherartigen
   Ansatzes  unter einem Loch, das kein Ansprechloch ist, ein
   flacher Ansatz (52) angeordnet ist, der in einen freien
   Raum der Führung (34) entsprechend einem Abstand (41)
   zwischen der unteren Querebene(43) und dem in Ruhestellung
   befindlichen Stift (35) einfügbar ist.

Fig.1

Fig.2

0050217

½

Fig.5

Fig.4

Anmelderin : Firma Pelikan AG, 3000 Hannover 1
Titel : "Messwertfolgerät"

## Fig. 3

27  28  29  30  31  5  4  3

VI

## Fig. 6

49  50

51  27  52

Anmelderin : Firma Pelikan AG, 3000 Hannover 1
...
...